Europäisches Patentamt

(19) European Patent Office

Office européen des brevets

(11) Veröffentlichungsnummer: **0 001 119**

**A2**

(12) # EUROPÄISCHE PATENTANMELDUNG

(21) Anmeldenummer: 78100840.4

(22) Anmeldetag: 07.09.78

(51) Int. Cl.²: **B 60 G 5/04**
**B 60 G 11/10**

(30) Priorität: 14.09.77 DE 7728347 U

(43) Veröffentlichungstag der Anmeldung:
21.03.79 Patentblatt 79 6

(84) Benannte Vertragsstaaten:
CH FR GB NL SE

(71) Anmelder: Bergische Achsenfabrik Fr. Kotz & Söhne
Am Ohlerhammer
D-5276 Wiehl 1(DE)

(72) Erfinder: Steiner, Helmut
Freiherr-vom-Stein-Strasse 1
D-5276 Wiehl 1(DE)

(74) Vertreter: Stenger, Alex, Dipl.-Ing. et al,
Malkastenstrasse 2
D-4000 Düsseldorf 1(DE)

(54) Verbundachsaggregat für Anhänger.

(57) Die Erfindung bezieht sich auf ein Verbundachsaggregat mit statischem und dynamischem Last- und Bremsausgleich, bei dem die Lager zwischen den Blattfedern und den Achskörpern so ausgebildet sind, daß die Lastwirkungslinie auch beim Verschwenken der Blattfedern relativ zum Achskörper immer durch die Achsmitte verläuft und die Federmitte immer über der Achsmitte liegt. Dazu wird das Lager zwischen den Blattfedern und dem Achskörper von einer fest mit dem Achskörper verbundenen, konvex gekrümmten unteren Lagerschale und einer fest mit der Blattfeder verbundenen, konkav gekrümmten oberen Lagerschale gebildet. Das Lager kann als Gleitlager oder als watungsfreies Gummilager ausgebildet sein.

Fig. 1

- 1 -

Verbundachsaggregat für Anhänger

Die Erfindung betrifft ein Verbundachsaggregat mit zwei oder mehr Achsen für Anhänger mit statischem und dynamischem Last- und Bremsausgleich, dessen starre Achsen über Blattfederpaare vorne und hinten an festen Konsolen und in der Mitte an in festen Konsolen schwenkbar gelagerten Ausgleicharmen gleitend abgestützt und mittels Längslenker geführt sind, wobei zwischen jeder Blattfeder und dem Achskörper ein Lager ausgebildet ist, dessen Krümmungsradius durch den Achsmittelpunkt geht und welches ein Verschwenken der Blattfeder relativ zum Achskörper nach vorne und hinten gestattet.

Aus der DE-OS 2 437 760 ist ein Verbundachsaggregat bekannt, bei dem die Blattfederpaare am vorderen Ende mit Federaugen und Bolzen angelenkt und am hinteren Ende gleitend abgestützt sind. An den Achsen sind die Blattfederpaare über konvex gekrümmte Gleitstücke längsbeweglich abgestützt. Eine solche Federaufhängung und -abstützung hat den Nachteil, daß beim Durchfedern im Fahrbetrieb Längenveränderungen der Blattfedern beiderseits der Achsen auftreten, welche den Lastausgleich stören.

Weiterhin ist aus der DT-OS 2 550 944 ein Verbundachsaggregat bekannt, bei dem das zwischen jeder Blattfeder
und dem Achskörper ausgebildete Lager aus einer Art
Wippe besteht, wobei ein die Blattfedern zusammenhaltender Federbund eine der Achse zugekehrt liegende Nut für
den Eingriff einer mit dem Achskörper fest verbundenen
Nase aufweist. Ein solches Lager nach Art einer Wippe
hat den Nachteil, daß die Lastwirkungslinie nur in den
unverschwenkten Ruhelage der Blattfeder durch den Achsmittelpunkt geht und beim Verschwenken der Blattfeder
seitlich auswandert. Durch diese im Fahrbetrieb zwangsläufig eintretende Verlagerung der Lastwirkungslinie
aus der Achsmitte heraus wird der dynamische Bremsausgleich gestört.

Davon ausgehend liegt der Erfindung die Aufgabe zugrunde, ein Verbundachsaggregat mit statischem und dynamischem Last- und Bremsausgleich zu schaffen, bei dem die
Lager zwischen den Blattfedern und den Achskörpern so
ausgebildet sind, daß die Lastwirkungslinie auch beim
Verschwenken der Blattfedern relativ zu den Achskörpern
immer durch die Achsmitte verläuft und die Federmitte
immer über der Achsmitte liegt.

Zur Lösung dieser Aufgabe wird ein Lager zwischen Blattfeder und Achskörper vorgeschlagen, welches von einer
fest mit dem Achskörper verbundenen, konvex gekrümmten
unteren Lagerschale sowie einer fest mit der Blattfeder
verbundenen, konkav gekrümmten oberen Lagerschale gebildet wird.

Das Lager kann als Gleitlager ausgebildet sein. Es ist
aber auch möglich, das Lager als wartungsfreies Gummilager auszubilden, wobei zwischen der mit dem Achskörper verbundenen, konvexen Lagerschale und der mit der Blattfeder verbundenen, konkaven Lagerschale ein Gummikissen einvulkanisiert ist, welches die Relativbewegungen zwischen den beiden Lagerschalen von ca. 15° aus der Ruhelage zu beiden Seiten hin aufzunehmen vermag.

Die konstruktive Lösung eines erfidnungsgemäß ausgebildeten Lagers kann so aussehen, daß die untere Lagerschale als Steg eines U-förmigen Federgehäuses ausgebildet und zusammen mit diesem am Achskörper befestigt ist, während die obere Lagerschale ein loses Konstruktionsteil ist und im Rücken eine Nut besitzt, mit welcher sie an einem in das Federgehäuse eingesetzten Federspannbügel fixiert ist. In das nach oben offene Ende des Federgehäuses kann eine Rolle eingesetzt sein, mit welcher die obere Lagerschale und der Federspannbügel mit dem Blattfederpaket gegen die am Achskörper befestigte untere Lagerschale verspannt wird.

Bei einer anderen praktischen Ausführungsform in Verbindung mit einer Vielblattfeder kann die obere Lagerschale auch von einer entsprechend geformten unteren Blattfederlage gebildet werden.

Ein Verbundachsaggregat mit einem erfindungsgemäß ausgebildeten Lager hat den Vorteil, daß die Blattfedern im Fahrbetrieb ohne Verschiebung ihrer Mitte so um den Achskörper herum verschwenkt werden, daß die Lastwirkungslinie immer durch den Achsmittelpunkt verläuft und dadurch nicht nur bei allen Fahrbedingungen eine gleichmäßige Lastverteilung, sondern vor allen Dingen gleiche Bremsmomente an allen Rädern und gleiche Bremsreaktionskräfte entstehen, wodurch erst ein optimaler dynamischer

- 4 -

Bremsausgleich innerhalb des Verbundachsaggregates ermöglicht wird.

Weitere Einzelheiten und Vorteile des Gegenstandes der
Erfindung ergeben sich aus der nachfolgenden Beschreibung der zugehörigen Zeichnungen, in denen bevorzugte
Ausführungsbeispiele eines Verbundachsaggregates mit
statischem Last- und dynamischem Bremsausgleich dargestellt sind. In den Zeichnungen zeigen:

Fig. 1        ein Verbundachsaggregat mit zwei Achsen entlang der Linie I-I in Fig. 2 geschnitten
              in Seitenansicht;

Fig. 2        dasselbe Verbundachsaggregat in Drauf-
              sicht;

Fig. 3        dasselbe Verbundachsaggregat in Ansicht
              von hinten;

Fig. 4        einen Ausschnitt aus Fig. 1 in vergrößerter Darstellung;

Fig. 5        einen Ausschnitt aus einem Verbundachsaggregat mit einer dreilagigen Blattfeder und
              einer Lenkerfeder in Seitenansicht;

Fig. 6        denselben Ausschnitt entlang der Linie
              VI-VI in Fig. 5 geschnitten;

Fig. 7        eine Vielblattfeder mit einer daran ausge-
              bildeten oberen Lagerschale in Seitenan-
              sicht;

Fig. 8          ein wartungsfreies Gummilager in Seitenansicht.

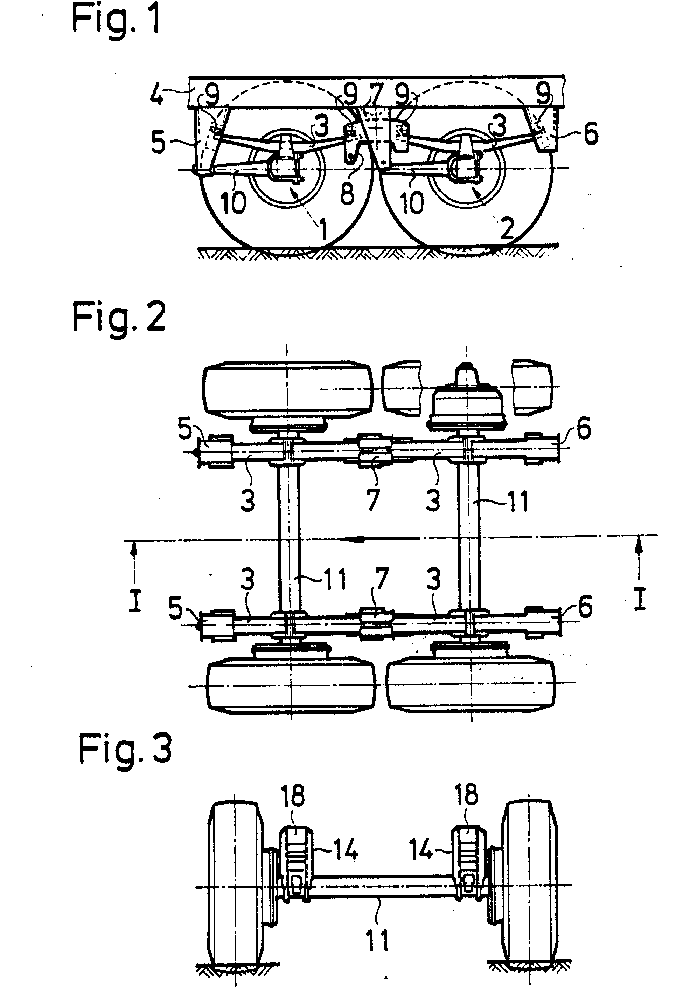

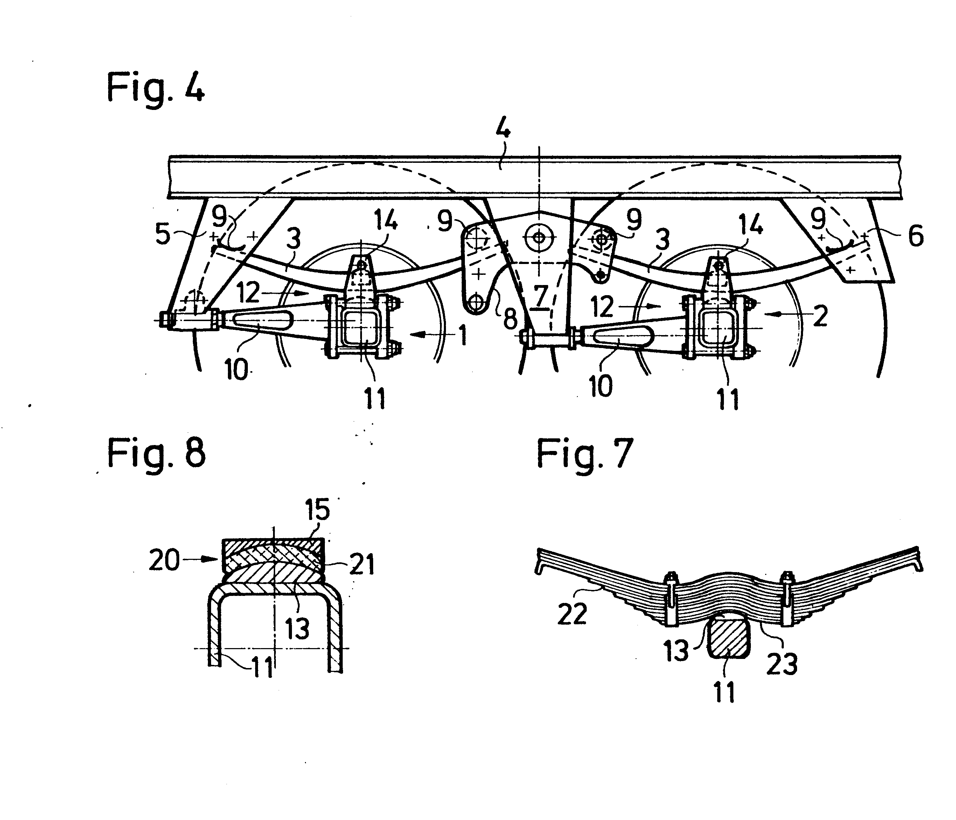

Bei dem in den Figuren 1 bis 4 dargestellten Verbundachsaggregat mit einer vorderen Achse 1 und einer hinteren Achse 2 sind die Achskörper mit als einlagige
Parabelfedern ausgebildeten Blattfedern 3 gegen einen
Fahrzeugrahmen 4 abgestützt. Die Abstützung besteht aus
festen vorderen Konsolen 5 und hinteren Konsolen 6 sowie einer mittleren Konsole 7 mit einem darin schwenkbar gelagerten Ausgleicharm 8. In den vorderen und hinteren Konsolen und dem Ausgleicharm 8 sind die Blattfedern 3 gegen Gleitstücke 9 gleitend abgestützt. In
Fahrtrichtung nach vorn werden die Achsen 1 und 2 durch
je zwei Längslenker 10 geführt.

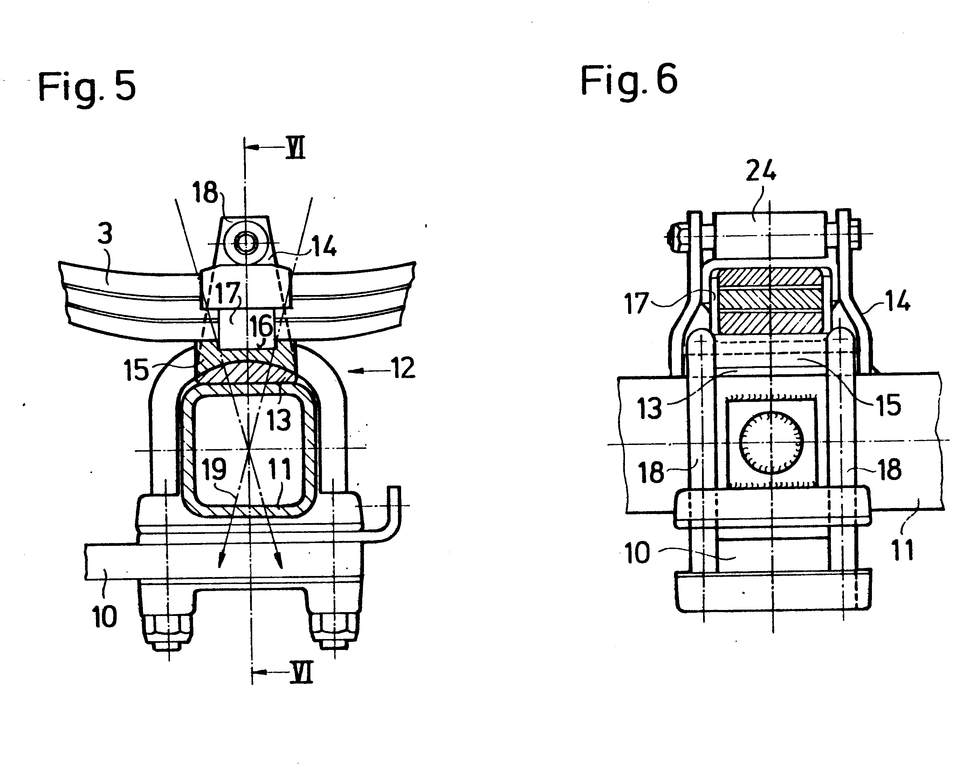

An den Achsen 1 und 2 ist die Verbindung zwischen ihrem
Achskörper 11 und den Blattfedern 3 als Gleitlager 12
ausgebildet. Jedes Gleitlager besteht, wie am besten aus
den Figuren 5 und 6 ersichtlich ist, aus einer konvex
gekrümmten unteren Lagerschale 13, die als Steg eines
U-förmigen Federgehäuses 14 ausgebildet ist, und aus
einer konkav gekrümmten oberen Lagerschale, die im
Rücken eine Nut 16 besitzt, in welche ein in das Federgehäuse 14 eingesetzter Federspannbügel 17 eingreift.
Das Federgehäuse 14 ist am oberen Ende über dem Federspannbügel 17 mit einer Rolle 24 geschlossen. Am unteren Ende ist das Federgehäuse 14 am Achskörper 11 angeschweißt und zusätzlich mit die untere Lagerschale 13
übergreifenden Bügeln 18 fixiert, an denen unter dem
Achskörper 11 der Längslenker 10 befestigt ist, welcher
bei dem Ausführungsbeispiel gemäß den Figuren 5 und 6
aus einer Viertelelliptikfeder besteht.

Die Gleitlager 12 sind so ausgelegt, daß jede Blattfeder 3 nach vorne und hinten um einen Winkel von ca. 15° verschwenkt werden kann, wobei die Lastwirkungslinie 19 in jeder Lage durch den Achsmittelpunkt verlaufen, weil der Krümmungsradius der beiden Lagerschalen 13 und 15 ebenfalls durch den Achsmittelpunkt geht. In der Figur 5 ist die aus der Mitte nach hinten verschwenkte und der Lastwirkungslinie 19 zuzuordnende Lage der oberen Lagerschale 15 strichpunktiert dargestellt worden. Es ist ohne weiteres möglich, die Gleitlager 12 durch ein Gummilager 20 zu ersetzen, welches ebenfalls aus einer unteren Lagerschale 13 und einer oberen Lagerschale 15 besteht, zwischen denen eine Gummilage 21 einvulkanisiert ist, welche den Schwenkwinkel von ca. 15° nach vorne und hinten aufzunehmen vermag. Natürlich ist es möglich, die Gummilage 21 auch durch einen geeigneten Kunststoff zu ersetzen.

Bei Verwendung einer Vielblattfeder 22 kann die obere Lagerschale auch direkt an einer unteren Federlage 23 ausgebildet sein, die zu diesem Zweck ebenso wie die übrigen Federlagen in der Mitte eine entsprechende konkave Krümmung besitzen muß, um mit der konvexen Krümmung der unteren Lagerschale 13 zusammenzuarbeiten.

Alle in der Beschreibung erwähnten und in den Zeichnungen dargestellten neuen Merkmale sind erfindungswesentlich, auch soweit sie in den nachfolgenden Ansprüchen nicht ausdrücklich beansprucht worden sind.

Bezugszeichenliste:

| | |
|---|---|
| 1 | Achse (vordere) |
| 2 | Achse (hintere) |
| 3 | Blattfeder |
| 4 | Fahrzeugrahmen |
| 5 | Konsole (vordere) |
| 6 | Konsole (hintere) |
| 7 | Konsole (mittlere) |
| 8 | Ausgleichsarm |
| 9 | Gleitstück |
| 10 | Längslenker |
| 11 | Achskörper |
| 12 | Gleitlager |
| 13 | Lagerschale (untere) |
| 14 | Federgehäuse |
| 15 | Lagerschale (obere) |
| 16 | Nut |
| 17. | Federspannbügel |
| 18 | Spannbügel |
| 19 | Lastwirkungslinie |
| 20 | Gummilager |
| 21 | Gummilage |
| 22 | Vielblattfeder |
| 23 | Federlage |

St/ro

A n s p r ü c h e :

1. Verbundachsaggregat mit zwei oder mehr Achsen für Anhänger mit statischem und dynamischem Last- und Bremsausgleich, dessen starre Achsen über Blattfederpaare vorne und hinten an festen Konsolen und in der Mitte an in festen Konsolen schwenkbar gelagerten Ausgleichsarmen gleitend abgestützt und mittels Längslenker geführt sind, wobei zwischen jeder Blattfeder und dem Achskörper ein Lager ausgebildet ist, dessen Krümmungsradius durch den Achsmittelpunkt geht und welches ein Verschwenken der Blattfeder relativ zum Achskörper nach vorne und hinten gestattet,
d a d u r c h   g e k e n n z e i c h n e t ,
daß das Leger (12, 20) von einer fest mit dem Achskörper (11) verbundenen, konvex gekrümmten unteren Lagerschale (13) sowie einer fest mit der Blattfeder (3) verbundenen, konkav gekrümmten oberen Lagerschale (15) gebildet ist.

2. Verbundachsaggregat nach Anspruch 1, dadurch gekennzeichnet, daß das Lager als Gleitlager (12) oder als wartungsfreies Gummilager (20) ausgebildet ist.

3. Verbundachsaggregat nach den Ansprüchen 1 und 2, dadurch gekennzeichnet, daß die untere Lagerschale (13) als Steg eines U-förmigen Federgehäuses (14) ausgebildet und zusammen mit diesem am Achskörper (11) befestigt ist.

4. Verbundachsaggregat nach den Ansprüchen 1 bis 3, dadurch gekennzeichnet, daß die obere Lagerschale (15) im Rücken eine Nut (16) besitzt und an einem darin eingreifenden Federspannbügel (17) fixiert ist.

5. Verbundachsaggregat nach den Ansprüchen 1 bis 4, dadurch gekennzeichnet, daß in das oben offene Ende des Federgehäuses (14) eine Rolle (24) eingesetzt ist.

6. Verbundachsaggregat nach den Ansprüchen 1 bis 5, dadurch gekennzeichnet, daß bei Verwendung einer Vielblattfeder (22) die obere Lagerschale von einer entsprechend konkav geformten unteren Federlage (23) gebildet wird.

0001119

## Fig. 1

## Fig. 2

## Fig. 3

Fig. 4

Fig. 7

Fig. 8

Fig. 6

Fig. 5